# EUROPEAN PATENT APPLICATION

(11) **EP 4 411 758 A1**
(43) Date of publication of application: **07.08.2024**
(21) Application number: 22875849.6
(22) Date of filing: 14.09.2022
(51) Int. Cl.: H01B 13/00, C01B 25/14, H01B 1/06, H01B 1/10, H01M 10/0562

(54) **METHOD FOR PRODUCING SULFIDE-BASED SOLID ELECTROLYTE**

(30) Priority: 30.09.2021 JP 2021161739
(71) Applicant: AGC INC., Chiyoda-ku, Tokyo 1008405 (JP)
(72) Inventor: OMORI Norifumi, Tokyo 100-8405 (JP); FUJII Naoki, Tokyo 100-8405 (JP)
(74) Representative: Müller-Boré & Partner Patentanwälte PartG mbB
(86) International application number: PCT/JP2022/034489
(87) International publication number: WO 2023/053978

(57) **Abstract**

The present invention relates to a method for producing a sulfide-based solid electrolyte, the method including dry-pulverizing a sulfide-based solid electrolyte material under an atmosphere having a dew point of -70°C to -30°C inclusive to produce a sulfide-based solid electrolyte powder.

## Description

### TECHNICAL FIELD

The present invention relates to a method for producing a sulfide solid electrolyte.

### BACKGROUND ART

Lithium-ion secondary batteries are widely used in portable electronic devices such as mobile phones and notebook computers. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte.

When the sulfide solid electrolyte is used in the all-solid-state lithium-ion secondary battery, the sulfide solid electrolyte may be pulverized so as to have a predetermined particle diameter. As such a pulverization method, wet pulverization is known in which a sulfide solid electrolyte is pulverized in a solvent. Although the wet pulverization requires a relatively short treatment time to achieve a desired particle diameter, there is a problem that the production cost increases because the cost of the solvent itself is required and a step of drying the solvent after pulverization is required.

On the other hand, it has been studied to pulverize a sulfide solid electrolyte by dry pulverization without using a solvent. For example, Patent Literature 1 describes a method for producing sulfide solid electrolyte particles, the method including atomizing a sulfide solid electrolyte, followed by subjecting an atomized product to a heat treatment, and describes that a jet mill, a ball mill or a bead mill is used for atomizing.

### CITATION LIST

### PATENT LITERATURE

Patent Literature 1: WO2018/164224

### SUMMARY OF INVENTION

### TECHNICAL PROBLEM

However, in the dry pulverization, the treatment time required to achieve a desired particle diameter is relatively long, an amount that can be treated per predetermined time is small, and pulverization efficiency may be deteriorated. In addition, in the dry pulverization, a lithium ion conductivity of the sulfide solid electrolyte may decrease after the pulverization.

In view of the above circumstances, an object of the present invention is to provide a method for producing a sulfide solid electrolyte capable of improving pulverization efficiency and preventing a decrease in lithium ion conductivity after pulverization when the sulfide solid electrolyte is dry-pulverized.

### SOLUTION TO PROBLEM

As a result of intensive studies, the present inventors have found that pulverization efficiency can be improved and a decrease in lithium ion conductivity after pulverization can be prevented by appropriately adjusting a pulverization environment at the time of dry pulverization.

That is, the present invention relates to the following 1 to 7.
1. A method for producing a sulfide solid electrolyte, the method including: dry-pulverizing a sulfide solid electrolyte material in an atmosphere with a dew point of -70°C or higher and -30°C or lower to produce a sulfide solid electrolyte powder.
2. The method for producing a sulfide solid electrolyte according to 1, in which an oxygen concentration in the atmosphere is 0.1 ppm or more and less than 5%.
3. The method for producing a sulfide solid electrolyte according to 1 or 2, in which athe sulfide solid electrolyte powder has an average particle diameter of 0.1 µm or more and 4 µm or less.
4. The method for producing a sulfide solid electrolyte according to any one of 1 to 3, in which the sulfide solid electrolyte powder has a specific surface area of 3 m²/g or more.
5. The method for producing a sulfide solid electrolyte according to any one of 1 to 4, in which the dry pulverization is performed with a jet mill.
6. The method for producing a sulfide solid electrolyte according to any one of 1 to 5, in which the sulfide solid electrolyte powder is a powder of a sulfide solid electrolyte containing an argyrodite crystal structure.
7. The method for producing a sulfide solid electrolyte according to any one of 1 to 6, in which no organic substance is attached to a particle surface of the sulfide solid electrolyte powder.

### ADVANTAGEOUS EFFECTS OF INVENTION

According to the present invention, it is possible to provide a method for producing a sulfide solid electrolyte capable of improving pulverization efficiency and preventing a decrease in lithium ion conductivity after pulverization. According to the production method, it is possible to efficiently produce a sulfide solid electrolyte having both a desired particle size and desired quality.

### BRIEF DESCRIPTION OF DRAWINGS

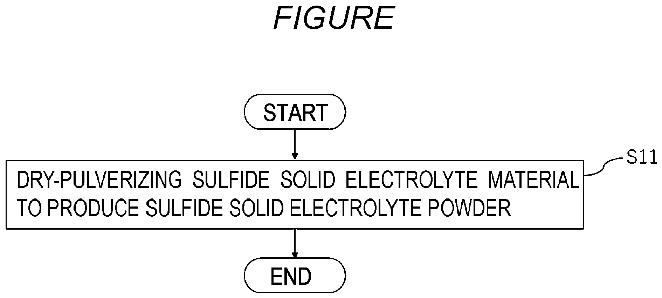

[FIGURE] The FIGURE is a flowchart illustrating an aspect of the present production method.

### DESCRIPTION OF EMBODIMENTS

Hereinafter, the present invention will be described in detail, but the present invention is not limited to the following embodiment and can be freely modified and implemented without departing from the gist of the present invention. In addition, the symbol "-" or the word "to" that is used to express a numerical range includes the numerical values before and after the symbol or the word as the upper limit and the lower limit of the range, respectively.

In the specification, a sulfide solid electrolyte before being dry-pulverized may be referred to as a "sulfide solid electrolyte material", and a sulfide solid electrolyte after being dry-pulverized may be referred to as a "sulfide solid electrolyte powder".

A method for producing a sulfide solid electrolyte according to an embodiment of the present invention (hereinafter, also referred to as the present production method) includes dry-pulverizing a sulfide solid electrolyte material in an atmosphere with a dew point of -70°C or higher and -30°C or lower to produce a sulfide solid electrolyte powder (dry pulverization step). The FIGURE is a flowchart illustrating an aspect of the present production method. The present production method includes step S11 of dry-pulverizing the sulfide solid electrolyte material to produce the sulfide solid electrolyte powder. In the present production method, the sulfide solid electrolyte material is dry-pulverized in the atmosphere with a dew point of -70°C or higher and -30°C or lower.

### (Sulfide Solid Electrolyte Material)

In the method for producing a sulfide solid electrolyte according to the embodiment of the present invention, various sulfide solid electrolytes can be used as the sulfide solid electrolyte material, and the sulfide solid electrolyte powder obtained by pulverizing the sulfide solid electrolyte material may be similarly various sulfide solid electrolytes. Examples of the sulfide solid electrolytes include a sulfide solid electrolyte containing Li, P, and S, and a sulfide solid electrolyte containing Li, P, S, and Ha. Here, the Ha represents at least one element selected from the group consisting of F, Cl, Br, and I.

Depending on the purpose, the sulfide solid electrolyte may be an amorphous sulfide solid electrolyte, a sulfide solid electrolyte having a specific crystal structure, or a sulfide solid electrolyte containing a crystal phase and an amorphous phase.

In the case where the sulfide solid electrolyte contains a crystal phase, a crystal contained in the sulfide solid electrolyte is preferably an ion-conductive crystal. Specifically, the ion-conductive crystal is a crystal having a lithium ion conductivity of preferably more than 10⁻⁴ S/cm, and more preferably more than 10⁻³ S/cm. The crystal phase is more preferably an argyrodite crystal phase from the viewpoint of excellent lithium ion conductivity.

More specifically, examples of the sulfide solid electrolyte include a sulfide solid electrolyte containing an LGPS type crystal structure such as Li₁₀GeP₂S₁₂, a sulfide solid electrolyte containing an argyrodite crystal structure such as Li₆PS₅Cl, Li_{5.4}PS_{4.4}Cl_{1.6}, and Li_{5.4}PS_{4.4}Cl_{0.8}Br_{0.8}, a Li-P-S-Ha-based crystallized glass; and an LPS crystallized glass such as LivPiSn. From the viewpoint of excellent lithium ion conductivity, a sulfide solid electrolyte containing an argyrodite crystal structure is preferable as the sulfide solid electrolyte.

In order to obtain an argyrodite crystal structure, the crystal phase contains Ha in addition to Li, P, and S. The Ha more preferably contains at least one of Cl and Br, still more preferably contains Cl, and yet still more preferably elemental Cl or a mixture of Cl and Br.

The argyrodite crystal includes Li, P, S, and Ha, and can be defined as having peaks at positions of 2θ = 15.7 ± 0.5° and 30.2 ± 0.5° in an X-ray powder diffraction (XRD) pattern. In addition to the above peaks, the XRD pattern preferably has a peak at a position of 2θ = 18.0 ± 0.5°, and more preferably has a peak at a position of 2θ = 25.7 ± 0.5°.

The argyrodite crystal preferably satisfies relationships of 5 < a < 7, 4 < b < 6 and 0 < c < 2 when expressed as LiₐPS_{b}Ha_{c} since a crystal tends to become an argyrodite crystal. Such element ratios more preferably satisfy relationships of 5.1 < a < 6.3, 4 < b < 5.3, and 0.7 < c < 1.9, and still more preferably satisfy relations of 5.2 < a < 6.2, 4.1 < b < 5.2, and 0.8 < c < 1.8.

That is, regarding a, 5 < a < 7 is preferable, 5.1 < a < 6.3 is more preferable, and 5.2 < a < 6.2 is still more preferable. Regarding b, 4 < b < 6 is preferable, 4 < b < 5.3 is more preferable, and 4.1 < b < 5.2 is still more preferable. Regarding c, 0 < c < 2 is preferable, 0.7 < c < 1.9 is more preferable, and 0.8 < c < 1.8 is still more preferable. Note that in the present specification, the "element ratio" means a ratio of a content (at%) of an element.

In the case of the argyrodite crystal, a preferable crystal structure is, for example, a cubic crystal such as F-43m, and a hexagonal crystal, a tetragonal crystal, an orthorhombic crystal, a monoclinic crystal, or the like having reduced symmetry or a triclinic crystal or the like having further reduced symmetry may exist.

When the Ha constituting the argyrodite crystal contains Cl and Br, a ratio represented by (x/y) is preferably 0.1 or more, more preferably 0.3 or more, and still more preferably 0.5 or more, in which x (at%) is a content of Cl and y (at%) is a content of Br in the argyrodite crystal. The ratio represented by (x/y) is preferably 10 or less, more preferably 3 or less, and still more preferably 1.6 or less.

When the ratio represented by (x/y) satisfies the above range, an interaction between lithium ions and halide ions is weakened, and the lithium ion conductivity of the sulfide solid electrolyte is likely to be satisfactory. This is considered to be caused by an influence of a mixed anion effect, which weakens an interaction between cations and anions by mixing bromide ions having an ionic radius larger than that of chloride ions. When the ratio represented by (x/y) satisfies the above range, cycle characteristics of a lithium-ion secondary battery are likely to be improved.

In the case where the Ha contains Cl and Br, when a ratio of the contents (at%) of elements constituting the argyrodite crystal is expressed as Liₐ-P-S_{b}-Cl_{c1}-Br_{c2}, c1 is preferably 0.1 or more, more preferably 0.3 or more, and still more preferably 0.5 or more. Preferably c1 is 1.5 or less, more preferably 1.4 or less, and still more preferably 1.3 or less. Preferably c2 is 0.1 or more, more preferably 0.3 or more, and still more preferably 0.5 or more. Preferably c2 is 1.9 or less, more preferably 1.6 or less, and still more preferably 1.4 or less.

When c1 and c2 each satisfy the above ranges, a stable argyrodite crystal can be obtained while an abundance proportion of halide ions in the crystal is optimized and the interaction between the anions and the lithium ions in the crystal is reduced. Accordingly, the lithium ion conductivity of the solid electrolyte is likely to be satisfactory. When c1 and c2 each satisfy the above ranges, the cycle characteristics of the lithium-ion secondary battery are likely to be improved.

Here, a, b, and (c1 + c2) preferably satisfy the same relationships as the above-described a, b, and c.

A crystallite size of the crystal constituting the crystal phase is preferably small from the viewpoint of obtaining good lithium ion conductivity when forming a battery. Specifically, the crystallite size is preferably 1000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of a peak in the XRD pattern and the Scherrer equation.

A composition of the sulfide solid electrolyte is determined by composition analysis using ICP emission spectrometry, atomic absorption, ion chromatography, or the like. A structure of the crystal contained in the sulfide solid electrolyte can be analyzed from an X-ray powder diffraction (XRD) pattern.

As the sulfide solid electrolyte material, a commercially available sulfide solid electrolyte may be used, or a sulfide solid electrolyte produced from a raw material may be used. In addition, these sulfide solid electrolyte materials may be further subjected to a known pretreatment. That is, the present production method may appropriately include a step of producing a sulfide solid electrolyte material and a step of performing a pretreatment on the sulfide solid electrolyte material.

In the case where a sulfide solid electrolyte is produced from a raw material to obtain a sulfide solid electrolyte material, the raw material and the production method can be appropriately selected from known raw materials and production methods according to a desired composition or the like.

The pretreatment of the sulfide solid electrolyte material is not particularly limited, and examples thereof include a treatment (coarse pulverization treatment) of pulverizing the sulfide solid electrolyte material so as to have a predetermined size or an average particle diameter. By the coarse pulverization treatment, the sulfide solid electrolyte material can be adjusted so as to have a size or an average particle diameter suitable for being subjected to the dry pulverization step. The average particle diameter of the sulfide solid electrolyte material may be appropriately adjusted according to the type of a pulverizer used in the dry pulverization step, and is preferably about 5 µm to 200 µm, for example. In the present specification, the average particle diameter refers to a median diameter (D50) determined from a chart of a volume-based particle size distribution obtained by measuring a particle size distribution using a laser diffraction particle size distribution analyzer MT 3300 EXII manufactured by Microtrac.

### (Dry Pulverization Step)

The present production method includes dry-pulverizing a sulfide solid electrolyte material in an atmosphere with a dew point of -70°C or higher and -30°C or lower to produce a sulfide solid electrolyte powder.

As a result of intensive studies, the present inventors have found that the pulverization efficiency can be improved and a decrease in lithium ion conductivity after pulverization can be prevented by adjusting the dew point to an appropriate range in an atmosphere during dry pulverization (hereinafter also referred to as a pulverization atmosphere).

Specifically, first, it has been found that when the dew point in the pulverization atmosphere is a predetermined value or more, the sulfide solid electrolyte material can be pulverized so as to have a desired particle size in a shorter time and the pulverization efficiency can be improved. In other words, it has been found that an amount of pulverization per predetermined time can be increased by setting the dew point in the pulverization atmosphere to a predetermined value or more.

The reason for this is considered as follows. The fact that the dew point is large to some extent means that some moisture is present in the pulverization atmosphere. Under such an atmosphere, S in the vicinity of a particle surface of a sulfide solid electrolyte material to be pulverized can react with water molecules by pulverization energy. Here, the pulverization energy is, for example, energy when particles of the sulfide solid electrolyte material collide with other particles, a pulverizer, media (pulverizing media), and the like. It is considered that when S in the vicinity of the particle surface reacts with the water molecules, S escapes from the vicinity of the particle surface, and instead, oxygen (O) enters the vicinity of the particle surface. Accordingly, it is considered that the crystal structure of the particles of the sulfide solid electrolyte material is collapsed or local strain is generated in the structure, and thus the particles become soft and are easily pulverized, and the time required for pulverizing is shortened.

Examples of S in the vicinity of the particle surface of the sulfide solid electrolyte material include sulfur that forms a PS₄ structure or the like and is bonded to cations and sulfur present in a state of S²⁻. In addition, in general, a bond strength of a P-O bond is larger than a bond strength of a P-S bond. However, even when the P-O bond is formed in the vicinity of the particle surface, an effect due to the collapse of the crystal structure of the particles or the generation of local strain in the structure is larger, and as a result, it is considered that the particles become soft.

On the other hand, it has also been found that, in the case where moisture is excessively present in the pulverization atmosphere, the crystal structure of the particles is excessively collapsed or sulfur is excessively eliminated, and the lithium ion conductivity tends to decrease after dry pulverization. Therefore, it has also been found that when the dew point in the pulverization atmosphere is set to a predetermined value or less to prevent excessive moisture in the pulverization atmosphere, a decrease in lithium ion conductivity after dry pulverization can be prevented.

Accordingly, the present inventors have found that both an improvement in pulverization efficiency and prevention of a decrease in lithium ion conductivity can be achieved by adjusting the dew point in the pulverization atmosphere to an appropriate range, and have completed the present invention.

That is, from the viewpoint of improving the pulverization efficiency, the dew point in the pulverization atmosphere is -70°C or higher, preferably -65°C or higher, and more preferably -60°C or higher.

Further, from the viewpoint of preventing a decrease in lithium ion conductivity, the dew point in the pulverization atmosphere is -30°C or lower, preferably -35°C or lower, and more preferably -40°C or lower. The dew point in the pulverization atmosphere is -70°C or higher and -30°C or lower, preferably -65°C or higher and -35°C or lower, and more preferably -60°C or higher and -40°C or lower. In the present specification, the dew point refers to a dew point under atmospheric pressure, and refers to a value measured using a capacitive moisture meter or a chilled mirror dew point meter regarding an atmosphere inside a pulverizing chamber.

In the present production method, it is preferable to adjust an oxygen concentration in the pulverization atmosphere. The reaction of S and O caused by the pulverization energy may also occur between S in the vicinity of the particle surface of the sulfide solid electrolyte material and O of oxygen molecules (O₂) in the pulverization atmosphere. Therefore, by adjusting the oxygen concentration in addition to the dew point, an effect of improving the pulverization efficiency and preventing the decrease in lithium ion conductivity after pulverization can be more easily achieved.

From the viewpoint of further improving the pulverization efficiency, the oxygen concentration in the pulverization atmosphere is preferably 0.1 ppm or more, more preferably 0.25 ppm or more, and still more preferably 0.5 ppm or more. The oxygen concentration in the pulverization atmosphere may be 1 ppm or more, 3 ppm or more, or 5 ppm or more.

From the viewpoint of further preventing a decrease in lithium ion conductivity, the oxygen concentration in the pulverization atmosphere is preferably less than 5%, more preferably 1% or less, still more preferably 5000 ppm or less, and particularly preferably 1000 ppm or less. The oxygen concentration in the pulverization atmosphere is preferably 0.1 ppm or more and less than 5%, more preferably 0.25 ppm or more and 1% or less, still more preferably 0.5 ppm or more and 5000 ppm or less, and particularly preferably 0.25 ppm or more and 1000 ppm or less. The oxygen concentration can be measured by a zirconia oxygen concentration meter, a galvanic cell oxygen concentration meter, or the like. Regarding the oxygen concentration, ppm means a volume-based ratio (volume ppm).

A gas mainly constituting the pulverization atmosphere is not particularly limited as long as the effect of the present invention can be achieved. However, for example, a gas selected from the group consisting of N₂, an inert gas such as He and Ar, dry air, and a mixed gas thereof is preferable, and a mixed gas of N₂ and dry air is more preferable from the viewpoint of easily reducing the supply gas cost.

A dew point of these gases can be adjusted, for example, by selecting and using a gas having an appropriate purity or mixing the gases at an appropriate ratio. Since the dry air contains oxygen (O₂), the oxygen concentration can be adjusted by, for example, mixing the inert gas and the dry air and adjusting a mixing ratio. More specifically, as an example of a preferable method for adjusting the dew point and the oxygen concentration, there is a method in which an inert gas and dry air having the same dew point are prepared and mixed so as to have a desired oxygen concentration. According to the method, the oxygen concentration can be adjusted while fixing the dew point when the inert gas and the dry air are mixed, and thus both the dew point and the oxygen concentration can be adjusted relatively easily.

In the present specification, the dry pulverization refers to a method of pulverizing a material to be pulverized in a gas atmosphere without using a solvent, in contrast to wet pulverization in which the material to be pulverized is pulverized in a solvent.

The pulverizer used for the dry pulverization is not particularly limited, and may be a pulverizer using media (pulverizing media) or a pulverizer not using media. The dry pulverization may be performed continuously or in a batch manner.

Examples of the pulverizer using media include a bead mill, a ball mill such as a planetary ball mill, and Attritor (registered trademark). Examples of the pulverizer not using media include an airflow pulverizer, a blade mill, a hammer mill, a pin mill, and a disk mill. Specific examples of the airflow pulverizer include a jet mill.

In the dry pulverization, a pulverization aid may be added to prevent aggregation of the sulfide solid electrolyte powder (sulfide solid electrolyte material). As the pulverization aid, an organic solvent, an inorganic material, or the like can be appropriately used, and the type thereof is not particularly limited as long as the effect of the present invention is not impaired. Examples of the organic solvent used as the pulverization aid include water, ethanol, acetone, a hydrocarbon solvent, and an ether solvent. The pulverization aid may be solid, liquid, or gaseous. An addition amount of the pulverization aid is preferably 1% by weight or less with respect to a total weight of the sulfide solid electrolyte powder (sulfide solid electrolyte material).

The pulverizer is preferably a bead mill, a planetary ball mill, or a jet mill from the viewpoint of reduction in production cost and more efficient pulverization, and more preferably a jet mill from the viewpoint of internal cleaning and reduction in media cleaning load.

In the dry pulverization using various types of pulverizers, an atmosphere of a space in which a material to be pulverized is substantially pulverized can be regarded as the pulverization atmosphere. That is, typically, if a dew point in a pulverizing chamber is -70°C or higher and -30°C or lower in each type of pulverizer, it can be said that the same applies to a dew point in the pulverization atmosphere. Regarding the oxygen concentration, similarly, it can be said that an oxygen concentration in the pulverizing chamber and the concentration in the pulverization atmosphere are the same.

An atmosphere other than the pulverization atmosphere, that is, the atmosphere in which the sulfide solid electrolyte material and the sulfide solid electrolyte powder are exposed before and after the dry pulverization may be the same as or different from the pulverization atmosphere. In the case where the sulfide solid electrolyte material or the sulfide solid electrolyte powder is exposed to an atmosphere different from the pulverization atmosphere, the atmosphere is preferably an atmosphere selected from the group consisting of an inert gas atmosphere, a dry air atmosphere, and a mixed atmosphere thereof, and more preferably an inert gas atmosphere, from the viewpoint of preventing deterioration of the sulfide solid electrolyte material or the sulfide solid electrolyte powder due to reaction with moisture, oxygen, or the like.

In the dry pulverization step, a pulverization time can be appropriately adjusted according to the type of the pulverizer, the desired particle diameter, and the like. As an example, in the case where the pulverizer is a jet mill, the pulverization time is preferably 1 minute or more, and more preferably 5 minutes or more. In the case where the pulverizer is a jet mill, the pulverization time may be 30 minutes or more, or may be 50 minutes or more. By making the pulverization time sufficiently long, a remaining amount of an input raw material can be reduced.

Further, in the case where the pulverizer is a jet mill and the pulverization is performed in a batch manner, the pulverization time is preferably 2 hours or less, and more preferably 1 hour or less from the viewpoint of efficiently performing the pulverization treatment. The pulverization time is preferably 1 minute or more and 2 hours or less, and more preferably 5 minutes or more and 1 hour or less. In the case where the dry pulverization is continuously performed, a continuous operation time of the pulverizer may be longer than the above. According to the present production method, the sulfide solid electrolyte material can be pulverized so as to have a desired particle size in a shorter time. In addition, according to the present production method, the pulverization time required to obtain the sulfide solid electrolyte powder having an appropriate particle size distribution can be relatively shortened.

In addition, in the case where the pulverizer is a jet mill, a pulverizing gas pressure is preferably 0.2 MPa or more, and more preferably 0.3 MPa or more. By sufficiently increasing the pulverizing gas pressure, it is possible not only to accelerate collisions between particles and obtain a desired average particle diameter, but also to reduce variations in particle size distribution. By reducing the particle diameter, it is possible to increase a contact area between particles of the sulfide solid electrolyte powder and the electrolytes, or between the particles of the sulfide solid electrolyte powder and an active material or a conductive aid, easily reduce a contact interface resistance, and contribute to improvement in battery performance when used in an all-solid-state lithium-ion secondary battery.

In the case where the pulverizer is a jet mill, the pulverizing gas pressure is preferably 0.95 MPa or less, and more preferably 0.85 MPa or less, from the viewpoint of efficient pulverization. The pulverizing gas pressure is preferably 0.2 MPa or more and 0.95 MPa or less, and more preferably 0.3 MPa or more and 0.85 MPa or less.

In the dry pulverization step, various conditions such as the temperature, the pressure, and the volume of the pulverizing chamber are not particularly limited as long as the effect of the present invention is not impaired, and can be appropriately set according to the type of the pulverizer, the type and the average particle diameter of the sulfide solid electrolyte material, the desired average particle diameter and properties of the sulfide solid electrolyte powder, and the like.

### (Sulfide Solid Electrolyte Powder)

The sulfide solid electrolyte material is pulverized by the dry pulverization to produce a sulfide solid electrolyte powder.

An average particle diameter of the sulfide solid electrolyte powder can be appropriately adjusted according to the application, desired battery characteristics, and the like. For example, from the viewpoint of improving battery characteristics, the average particle diameter is preferably 4 µm or less, more preferably 3 µm or less, still more preferably 2 µm or less, and particularly preferably 1 µm or less. Further, in consideration of a particle diameter that can be reached in a practical time in the dry pulverization, the average particle diameter is preferably 0.1 µm or more, more preferably 0.3 µm or more, and still more preferably 0.5 µm or more. The average particle diameter is preferably 0.1 µm to 4 µm, more preferably 0.3 µm to 3 µm, still more preferably 0.5 µm to 2 µm, and particularly preferably 0.5 µm to 1 µm.

Similarly to the average particle diameter, a specific surface area of the sulfide solid electrolyte powder can be appropriately adjusted according to the application, desired battery characteristics, and the like. For example, from the viewpoint of improving the battery characteristics, the specific surface area is preferably 3 m²/g or more, more preferably 5 m²/g or more, and still more preferably 10 m²/g or more. Further, from the viewpoint of a long-term storage property, the specific surface area is preferably 100 m²/g or less, more preferably 50 m²/g or less, and still more preferably 30 m²/g or less. The specific surface area is preferably 3 m²/g to 100 m²/g, more preferably 5 m²/g to 50 m²/g, and still more preferably 10 m²/g to 30 m²/g. The specific surface area can be measured by BET specific surface area measurement using, for example, a highly functional specific surface area and pore size distribution measuring device ASAP-2020 manufactured by Micromeritics.

Generally, the smaller the average particle diameter of the powder, the larger the specific surface area. Here, as the specific surface area increases, an influence from a surrounding atmosphere tends to increase. Therefore, fine pulverization in which the average particle diameter after pulverization falls within the preferable range described above is preferable because the effect of the present invention can be more remarkably achieved.

The lithium ion conductivity of the sulfide solid electrolyte powder varies depending on the type, average particle diameter, and the like of the sulfide solid electrolyte, and is not particularly limited. As an example, in the case where the sulfide solid electrolyte powder is formed into a powder body under pressure of 380 MPa and the powder body is used as a measurement sample, the lithium ion conductivity at 25°C is preferably 2 mS/cm or more, and more preferably 3 mS/cm or more. The lithium ion conductivity is preferably as high as possible, but an upper limit thereof is actually about 10 mS/cm. The lithium ion conductivity may be 2 mS/cm to 10 mS/cm or 3 mS/cm to 10 mS/cm. The lithium ion conductivity of the sulfide solid electrolyte powder can be measured by, for example, an AC impedance device.

According to the present production method, a decrease in the lithium ion conductivity of the sulfide solid electrolyte powder after dry pulverization is prevented, and thus a sulfide solid electrolyte powder having relatively excellent lithium ion conductivity is easily obtained.

In the sulfide solid electrolyte powder obtained by the present production method, no organic substance is attached to a powder particle surface. In a sulfide solid electrolyte powder pulverized by the wet pulverization, an organic substance derived from a solvent used for the pulverization is attached to the powder particle surface and remains even after the solvent is dried. When the sulfide solid electrolyte powder is used in an all-solid-state lithium-ion secondary battery, such an organic substance is a cause of deterioration in battery performance. Specifically, it is considered that the organic substance reacts at an interface between particles of the sulfide solid electrolyte powder and particles of an active material, and hinders a battery reaction at the interface. On the other hand, in the sulfide solid electrolyte powder obtained by the present production method, the organic substance is not attached to the powder particle surface, and thus it is possible to prevent deterioration of battery characteristics due to the attachment of the organic substance. The fact that no organic substance is attached to a particle surface of the sulfide solid electrolyte powder can be confirmed from a change in color of the powder when the sulfide solid electrolyte powder is heated at 350°C or higher for 30 minutes or more. Specifically, when no organic substance is attached to the particle surface, the color of the powder does not change before and after heating, but when the organic substance is attached to the particle surface, the color changes to brown or gray after heating. The color of the sulfide solid electrolyte powder before heating varies depending on the composition or the like, but is generally white or light yellow. When the organic substance is attached to the particle surface, the change in color after heating can be visually confirmed.

The present production method may include a step of subjecting the sulfide solid electrolyte powder to a heat treatment as necessary. The heat treatment is appropriately performed, for example, for the purpose of stabilizing the composition of the sulfide solid electrolyte powder or stabilizing a crystal structure contained in the powder. A temperature of the heat treatment is preferably a temperature at which the sulfide solid electrolyte powder is not aggregated, and for example, the heat treatment is preferably performed at 200°C to 500°C for 1 minute to 120 minutes.

The present production method may further include a known post-treatment step such as a step of classifying the sulfide solid electrolyte powder or a step of disintegrating the sulfide solid electrolyte powder.

According to the present production method, when the sulfide solid electrolyte is dry-pulverized, the sulfide solid electrolyte can be pulverized so as to have a desired particle size in a shorter time, so that the pulverization efficiency can be improved and a decrease in lithium ion conductivity after pulverization can be prevented. According to the production method, it is possible to efficiently produce a sulfide solid electrolyte having both a desired particle size and desired quality. The sulfide solid electrolyte produced by the present production method is suitable as a solid electrolyte material used in, for example, an all-solid-state lithium-ion secondary battery. According to the sulfide solid electrolyte produced by the present production method, improvement in battery characteristics of the all-solid-state lithium-ion secondary battery is also expected.

### EXAMPLES

Hereinafter, the present invention will be described in detail with reference to Examples, but the present invention is not limited thereto. Examples 1 to 6 are inventive examples of the present production method, and Examples 7 to 9 are comparative examples.

### (Production Example 1)

A lithium sulfide powder (manufactured by Sigma Corporation, purity: 99.98%), a phosphorus pentasulfide powder (manufactured by Sigma Corporation, purity: 99%), a lithium chloride powder (manufactured by Sigma Corporation, purity: 99.99%), and a lithium bromide powder (manufactured by Sigma Corporation, purity: 99.995%) were weighed so as to have a ratio (molar ratio) of Li₂S: P₂S₅: LiCl: LiBr = 1.9: 0.5: 0.8: 0.8 and mixed in a mortar. The mixture was vacuum-sealed in a quartz tube and heated at 750°C for 1 hour to obtain a sulfide solid electrolyte having a composition of Li_{5.4}PS_{4.4}Cl_{0.8}Br_{0.8}. The obtained sulfide solid electrolyte was pulverized in the mortar and passed through a mesh having an opening of 100 µm to obtain a sulfide solid electrolyte material having an average particle diameter of 10 µm.

### (Example 1)

The sulfide solid electrolyte material (25 g) obtained in Production Example 1 was prepared. The prepared sulfide solid electrolyte material was dry-pulverized for 30 minutes in a jet mill (Pocket Jet Jr, manufactured by Kurimoto, Ltd.) to obtain a sulfide solid electrolyte powder. At the time of dry pulverization, a mixed gas of N₂ and dry air was used as a pulverizing gas and a purge gas, and a dew point and an oxygen concentration of the mixed gas were adjusted to values shown in Table 1 so that a dew point and an oxygen concentration of the pulverization atmosphere became values shown in Table 1. The pulverization conditions of the jet mill were as follows.
Purge gas pressure: 0.2 MPa
Pulverizing gas pressure: 0.6 MPa

### (Examples 2, 3, and 6 to 8)

A sulfide solid electrolyte powder was obtained in the same manner as in Example 1 except that the dew point and the oxygen concentration of the pulverizing gas and the purge gas were changed to the values shown in Table 1.

### (Examples 4, 5, and 9)

The sulfide solid electrolyte material (25 g) obtained in Production Example 1 was prepared. A planetary ball mill (LP-M2, manufactured by Ito Seisakusho Co., Ltd.) was used as a pulverizer, a gas in a pulverizing chamber was a mixed gas of N₂ and dry air, and a dew point and an oxygen concentration of the mixed gas were adjusted to values shown in Table 1. Super dehydrated toluene (manufactured by FUJIFILM Wako Pure Chemical Corporation) as a pulverization aid was added to the sulfide solid electrolyte material in an amount of 0.1% by mass of the sulfide solid electrolyte material, and dry pulverization was performed at 200 rpm for 30 minutes using a ball having a particle diameter of 2 mm to obtain a sulfide solid electrolyte powder.

Each of the sulfide solid electrolyte powders obtained by the methods of Examples 1 to 9 was evaluated as follows. The results of each evaluation are shown in Table 1.

### (Evaluation of Average Particle Diameter)

The average particle diameter of the sulfide solid electrolyte powder was measured and evaluated according to the following criteria. The average particle diameter refers to a median diameter (D50) determined from a chart of a volume-based particle size distribution obtained by measuring a particle size distribution using a laser diffraction particle size distribution analyzer MT 3300 EXII manufactured by Microtrac.

### (Evaluation Criteria)

A: The average particle diameter was 3 µm or less.
B: The average particle diameter was more than 3 µm and 4 µm or less.
C: The average particle diameter was larger than 4 µm.

### (Evaluation of Lithium Ion Conductivity)

The sulfide solid electrolyte powder was formed into a powder body under pressure of 380 MPa, the powder body was used as a measurement sample, and the lithium ion conductivity was measured using an AC impedance measuring device (potentiostat/galvanostat VSP, manufactured by Bio-Logic Sciences Instruments) and evaluated according to the following criteria.

The measurement conditions were as follows: a measurement frequency of 100 Hz to 1 MHz, a measurement voltage of 100 mV, and a measurement temperature of 25°C.

### (Evaluation Criteria)

A: The lithium ion conductivity was 4 mS/cm or more.
B: The lithium ion conductivity was 3 mS/cm or more and less than 4 mS/cm.
C: The lithium ion conductivity was 2 mS/cm or more and less than 3 mS/cm.
D: The lithium ion conductivity was less than 2 mS/cm.

### (Evaluation of Battery Performance)

Battery performance when the sulfide solid electrolyte powder was used in an all-solid-state lithium-ion secondary battery was evaluated. First, a positive electrode mixture and an all-solid-state lithium-ion secondary battery were produced by the following method, and a charge and discharge test was performed. The results of the charge and discharge test were evaluated according to the following evaluation criteria.

### (Preparation of Positive Electrode Mixture)

A layered rock-salt LiCoO₂ powder (volume average particle diameter: 10 µm) coated with LiNbO₃ was used as a positive electrode active material, and 35 parts of the sulfide solid electrolyte powder obtained by the method of each example, 60 parts of the positive electrode active material, and 5 parts of a conductive aid (acetylene black, manufactured by Denka Company Limited, HS 100) were mixed to prepare a positive electrode mixture. A thickness of the LiNbO₃ coat was 7 nm by TEM observation.

### (Production of All-Solid-State Lithium-Ion Secondary Battery)

The sulfide solid electrolyte powder (80 mg) obtained by the method of each example was charged into a plastic cylinder having a diameter of 10 mm and pressure-molded to form a solid electrolyte layer. Next, 10 mg of the positive electrode mixture prepared above was charged into the same cylinder and pressure-molded again to form a positive electrode layer. Further, an indium foil and a lithium foil were charged from the side opposite to the positive electrode mixture to form a negative electrode layer. An all-solid-state lithium-ion secondary battery was prepared in this manner, and a battery performance evaluation test was performed at a confining pressure of 10 kN.

### (Battery Performance Evaluation Test)

Each of the prepared all-solid-state lithium-ion secondary batteries was subjected to one cycle of a constant current charge and discharge test at 25°C, a charge and discharge current density of 0.05 C, and a charge and discharge potential range of 1.9 to 3.7 V. A discharge capacity at a first cycle in the battery performance evaluation test of each example was evaluated by a relative value using a discharge capacity at a first cycle in Example 5 as a reference value, that is, (discharge capacity at first cycle of each example)/(discharge capacity at first cycle in Example 5).

### (Evaluation Criteria)

A: The relative value was larger than 1.1.
B: The relative value was larger than 1.0 and 1.1 or less.
C: The relative value was larger than 0.9 and 1.0 or less.
D: The relative value was 0.9 or less.

**Table 1**

| | Pulverization method | Pulverization time | Oxygen concentration | Dew point | Evaluation | | |
|---|---|---|---|---|---|---|---|
| | | | | | Average particle diameter | Conductivity | Battery performance |
| Example 1 | Jet mill | 30 minutes | 5 ppm | -50°C | A | A | A |
| Example 2 | Jet mill | 30 minutes | 1000 ppm | -50°C | A | A | A |
| Example 3 | Jet mill | 30 minutes | 1% | -50°C | A | B | B |
| Example 4 | Planetary ball mill | 30 minutes | 5 ppm | -50°C | B | B | B |
| Example 5 | Planetary ball mill | 30 minutes | 0.1 ppm | -65°C | B | B | C |
| Example 6 | Jet mill | 30 minutes | 5% | -50°C | A | C | C |
| Example 7 | Jet mill | 30 minutes | 5% | -20°C | A | D | D |
| Example 8 | Jet mill | 30 minutes | 0.1 ppm | -20°C | B | D | D |
| Example 9 | Planetary ball mill | 30 minutes | 0.1 ppm | -20°C | C | D | D |

In all of Examples 1 to 6 which are inventive examples, the evaluation of the lithium ion conductivity was excellent compared to Examples 7 to 9 which are comparative examples. That is, even in the case of the sulfide solid electrolyte powder obtained by dry-pulverizing the same sulfide solid electrolyte material, it is considered that the powders obtained in Examples 1 to 6, which are inventive examples, prevented a decrease in lithium ion conductivity during pulverization, and had a higher lithium ion conductivity of the sulfide solid electrolyte powder.

In addition, in the methods of Examples 1 to 3 and 6 using the jet mill, the average particle diameter of the sulfide solid electrolyte powder could be reduced in the same pulverization time, compared to the method of Example 8. In the methods of Examples 4 and 5 using the planetary ball mill, the average particle diameter of the sulfide solid electrolyte powder could be further reduced in the same pulverization time, compared to the method of Example 9. From these results, it was confirmed that the methods of Examples 1 to 6 were superior in terms of pulverization efficiency and could pulverize the sulfide solid electrolyte so as to have a desired particle size in a shorter time. In Example 7, in addition to the fact that the dew point was too high, the oxygen concentration was also excessive, and thus only the average particle diameter after pulverization was equivalent to the results of Examples 1 to 3 and 6. However, the decrease in lithium ion conductivity could not be prevented, and thus both of them could not be achieved.

From the above results, it was confirmed that in Examples 1 to 6, which are inventive examples, the dew point in the pulverization atmosphere was appropriately adjusted, and thus it was possible to achieve both the pulverization efficiency and the prevention of the decrease in lithium ion conductivity after pulverization. In addition, in all of Examples 1 to 6 which are inventive examples, the battery performance was excellent compared to Examples 7 to 9 which are comparative examples.

Although the present invention has been described in detail with reference to specific embodiments, it is apparent to those skilled in the art that various changes and modifications can be made without departing from the spirit and scope of the present invention. The present application is based on a Japanese Patent Application (No. 2021-161739) filed on September 30, 2021, the contents of which are incorporated herein by reference.

## Claims

1. A method for producing a sulfide solid electrolyte, the method comprising:
dry-pulverizing a sulfide solid electrolyte material in an atmosphere with a dew point of -70°C or higher and -30°C or lower to produce a sulfide solid electrolyte powder.

2. The method for producing a sulfide solid electrolyte according to claim 1, wherein an oxygen concentration in the atmosphere is 0.1 ppm or more and less than 5%.

3. The method for producing a sulfide solid electrolyte according to claim 1 or 2, wherein the sulfide solid electrolyte powder has an average particle diameter of 0.1 µm or more and 4 µm or less.

4. The method for producing a sulfide solid electrolyte according to any one of claims 1 to 3, wherein the sulfide solid electrolyte powder has a specific surface area of 3 m²/g or more.

5. The method for producing a sulfide solid electrolyte according to any one of claims 1 to 4, wherein the dry pulverization is performed with a jet mill.

6. The method for producing a sulfide solid electrolyte according to any one of claims 1 to 5, wherein the sulfide solid electrolyte powder is a powder of a sulfide solid electrolyte comprising an argyrodite crystal structure.

7. The method for producing a sulfide solid electrolyte according to any one of claims 1 to 6, wherein no organic substance is attached to a particle surface of the sulfide solid electrolyte powder.
